# EUROPÄISCHE PATENTSCHRIFT

(11) **EP 2 862 891 B1**
(45) Veröffentlichungstag und Bekanntmachung des Hinweises auf die Patenterteilung: **11.07.2018**
(21) Anmeldenummer: 14003480.2
(22) Anmeldetag: 10.10.2014
(51) Int. Cl.: C08J 3/20, C08J 3/12, A01N 65/06

(54) **Verfahren zur Herstellung von synthetischen Produkten**
Method for producing synthetic products
Procédé de fabrication de produits synthétiques

(30) Priorität: 11.10.2013 DE 102013016928
(43) Veröffentlichungstag der Anmeldung: 22.04.2015
(73) Patentinhaber: Gustav Wilms OHG, 49152 Bad Essen (DE)
(72) Erfinder: Wilms, Heinrich, 49324 Melle (DE)
(74) Vertreter: Pott, Ulrich

(56) Entgegenhaltungen:
- WO-A1-00/09172
- WO-A1-2012/038594
- WO-A2-2007/140116
- US-A1- 2005 136 278
- US-A1- 2008 038 373

## Beschreibung

Die Erfindung bezieht sich auf ein Verfahren zur Herstellung von synthetischen Produkten aus einem fließfähigen synthetischen Ausgangsmaterial, insbesondere zur Herstellung von Silikonen, Farben, Lacken und insbesondere Kunststoffprodukten Polyethylen, Polypropylen oder dergleichen Polyolefine, wobei das fließfähige synthetische Ausgangsmaterial mit Partikeln und/oder Inhaltsstoffen aus einem Kiefernkernholzmaterial versehen wird.

Verfahren zur Herstellung von synthetischen Produkten aus unter Temperatureinwirkung in einen fließfähigen Zustand überführte Ausgangsmaterialien sind allgemein bekannt. So können beispielsweise Kunststoffgranulate erhitzt und unter Verwendung üblicher Kunststoffverarbeitungsmaschinen zu Zwischenprodukten und Endprodukten weiter verarbeitet werden. Derartige Kunststoffprodukte auch als Zwischen- oder auch als Endprodukt sind im praktischen Einsatz und mithin im täglichen Lebensbereich Keimbelastungen ausgesetzt, womit im täglichen Gebrauch Risiken einhergehen. Sollen derartige Gegenstände desinfiziert oder sterilisiert werden, insbesondere, wenn diese auch im medizinischen Bereich Einsatz finden oder beispielsweise auch bei Kleinkindern, ist ein entsprechender Desinfektions- und Sterilisationsaufwand zu betreiben, beispielsweise in Gestalt von Begasung, Strahlung und dergleichen mehr.

Es ist Aufgabe der vorliegenden Erfindung, ein Verfahren zur Herstellung von synthetischen Produkten zu schaffen, mit dem in hygienischen Gesichtspunkten verbesserte End- oder auch Zwischenprodukte aus dem synthetischen Ausgangsmaterial herzustellen sind.

Zur Lösung dieser Aufgabe zeichnet sich das Verfahren der eingangs genannten Art zunächst dadurch aus, dass vor Weiterverarbeitung des mit den Partikeln aus dem Kiefernkernholzspänen oder dem Kiefernkernholzmehl versehenen synthetischen Ausgangsmaterials das mit den Kiefernkernholzspänen oder dem Kiefernkernholzmehl versehene synthetische Ausgangsmaterial einem Abscheider wie einem Spaltfilter, einem Siebfilter oder einer Zentrifuge zum Abscheiden von Kiefernkernholzspänen und/oder zum Abscheiden von Kiefernkernholzmehl zugeführt wird.

Eine alternative Lösung dieser Aufgabe sieht bei einem Verfahren der eingangs genannten Art vor, dass das synthetische Ausgangsmaterial einer mit Kiefernkernholzmaterialien versehenen Impfvorrichtung zugeführt und nach einer einstellbaren Verweildauer aus der Impfvorrichtung abgeführt werden, wobei die Impfvorrichtung als eine mit Kiefernkernholzmaterialien versehene Kartusche ausgebildet ist.

Durch dieses Verfahren ist ein Zwischenprodukt, aber auch ein fertiges Endprodukt aus dem synthetischen Ausgangsmaterial herzustellen, bei dem aufgrund der Beimischung bzw. der Impfung mit dem Kiefernkernholzmaterial bzw. mit den Inhaltsstoffen eines Kiefernkernholzmaterials das Zwischenprodukt oder auch das Endprodukt eine antibakterielle Wirkung aufweist, das auch sehr lange Zeit in dem Fertigprodukt bzw. Zwischenprodukt erhalten bleibt. So können beispielsweise mit dem erfindungsgemäßen Verfahren antibakteriell ausgerüstete Lacke, Farben, Silikonstoffe und insbesondere auch Kunststoffgranulate und Pellets hergestellt werden, die dann zu beliebigen anderen Produkten weiter verarbeitet werden können, sei es zu Möbelbeschlägen, Kinderspielzeug, Ausrüstungsgegenstände für Haushalt und Küche, Automobilen und dergleichen mehr. Den Anwendungsfällen sind dabei keine Grenzen gesetzt. Wesentlicher Vorteil ist, dass aufgrund der antibakteriell wirkenden Kiefernkernholzanteile das synthetische Ausgangsmaterial keimtötend ausgerüstet wird.

Es lassen sich dabei verschiedene Varianten darstellen und auch miteinander kombinieren. So kann beispielsweise als Ausgangs- bzw. Trägermaterial ein Kunststoffgranulat Einsatz finden, das in einen Vormischbehälter mit Kiefernkernholzspänen oder einem Kiefernkernholzmehl versetzt wird. Dazu kann ein Rühr- oder Knetwerk eingesetzt werden. Diese Mischung kann auf Temperaturen von 170° bis 200° C beispielsweise erwärmt werden, um das Kunststoffgranulat in den fließfähigen bzw. flüssigen Zustand zu versetzen. Die Temperatur kann dabei variieren, je nach dem eingesetzten Ausgangs- bzw. Trägermaterial. Nach Vermischung des Trägermaterials mit den Kieferkernholzspänen kann dieses einem Extruder oder einer sonstigen geeigneten Fördereinrichtung zugeleitet werden. Je nach Bedarf, kann dabei von diesem Extruder das gemischte Zwischenprodukt wieder in den Ausgangsprozess und mithin in den Vormischbehälter rückgeführt werden, oder aber auch direkt zu einem Fertigprodukt, beispielsweise Kunststoffpellets abgekühlt werden, dass dann die entsprechenden Kiefernkernholzspäne noch enthalten kann, die bis an die Oberfläche reichen. Alternativ ist es auch möglich, vor Herstellung des Fertigproduktes in Gestalt von z.B. Kunststoffpellets bzw. Kunststoffgranulat das Gemisch über einen Abscheider zu führen, beispielsweise einen Spaltfilter, einen Siebfilter oder eine Zentrifuge, um die Kiefernkernholzspäne abzuscheiden, was dazu führt, dass das Fertigprodukt zwar mit den Inhaltsstoffen der Kiefernkernholzspäne geimpft ist, gleichwohl jedoch in dem Fertigprodukt, also beispielsweise in den Pellets, keine Späne mehr enthalten sind.

Ebenfalls ist es möglich, und zwar alternativ, zuvor aus dem Kiefernkernholzmaterial, z.B. durch Herausdampfen, Inhaltsstoffe, z.B. Glührückstände zu gewinnen, um diese Glührückstände dem fließfähigen Ausgangsmaterial, also beispielsweise dem in den fließfähigen Zustand versetzten Kunststoffgranulat beizufügen. Danach kann dieses ebenfalls zu Fertig- bzw. Zwischenprodukten wie Kunststoffgranulat weiter verarbeitet werden oder über eine Rückführmöglichkeit wiederum z.B. einem Extruder zugeführt werden, um hierdurch eine Aufkonzentration zu erreichen. Alternativ ist es möglich, bei dieser Variante auch wiederum ohne den Einsatz eines Vormischbehälters z.B. Kiefernkernholzspäne direkt dem Extruder zuzuführen.

Eine weitere Möglichkeit besteht beispielsweise darin, ein fließfähiges Ausgangsmaterial wie beispielsweise ein Kunststoffgranulat einem Extruder oder einer sonstigen Misch- bzw. Fördereinrichtung zuzuführen und dieses fließfähige Trägermaterial durch ein Kiefernkernholzmaterial, beispielsweise Kiefernkernholzspäne hindurchzudrücken, wobei die entsprechende Verweilzeit des fließfähigen Materials innerhalb des Kiefernkernholzmaterials einstellbar ist. Dazu kann beispielsweise eine Kartusche vorgesehen sein, die mit den Kiefernkernholzmaterialien, beispielsweise Kieferkernholzspänen, gefüllt ist. Diese kann beispielsweise in einer Vorrichtung auswechselbar angeordnet werden, um diese einfach austauschbar vorgehalten zu haben. Nach der entsprechenden Verweilzeit innerhalb des Kiefernkernholzmaterials kann dann wiederum wie bei der ersten beschriebenen Variante das Fertigprodukt über einen Abscheider geführt werden, um etwa mitgeführte Kiefernkernholzspäne abzuscheiden, um dann wiederum zu einem Fertigprodukt wie beispielsweise Kunststoffpellets weiter verarbeitet zu werden.

Wesentliche weitere Ausgestaltungen ergeben sich aus weiteren Unteransprüchen, der nachfolgenden Beschreibung und der Zeichnung, wobei noch zu erwähnen ist, dass z.B. Kiefernkernholzspäne vor Einsatz auf eine Restfeuchte von 5 % bis 7,5 % getrocknet werden.

In den Zeichnungen sind vier Ausführungsbeispiele von Verfahrensvarianten veranschaulicht.

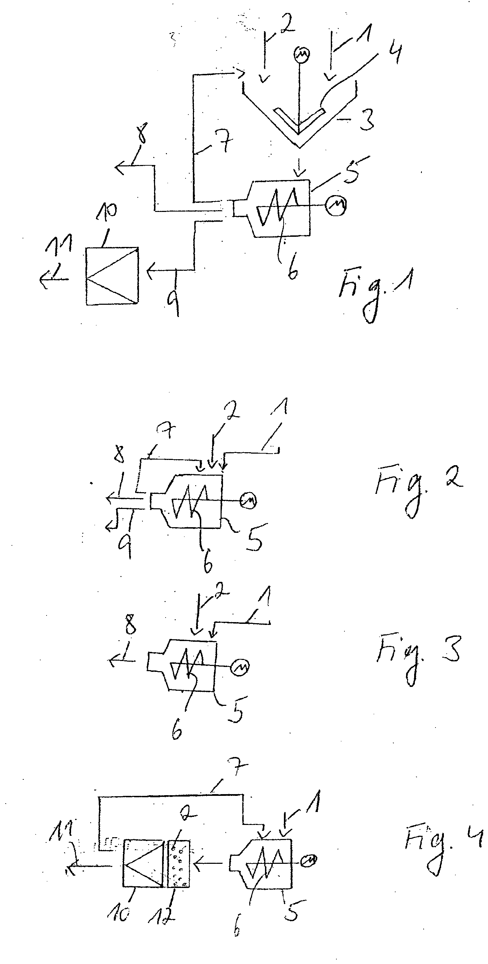

In Fig. 1 ist eine Variante dargestellt, bei der ein Ausgangsmaterial 1 und Kiefernkernholzspäne 2 einem Vormischbehälter 3 zugeführt werden, indem diese unter Einsatz eines Rühr- oder Knetwerkes 4 bei Temperaturen von 170° bis 200° C vermischt werden. Anschließend werden sie einem Extruder 5 zugeführt, der eine motorisch antreibbare Schnecke 6 aufweist. Je nach dem, was gewünscht wird, kann diese über die Leitung 7 in den Vormischbehälter zurückgeführt werden, oder mit Kiefernkernholzmaterialien versetzt über die Leitung 8 abgeführt werden, um beispielsweise danach Kunststoffgranulat bzw. Kunststoffpellets zu fertigen. Alternativ ist es möglich, über die Leitung 9 das Gemischprodukt einem Abscheider 10 zuzuführen, um ein antibakteriell ausgerüstetes Ausgangsmaterial frei von Kiefernkernholzspänen bei 11 abzuführen.

Die Herstellungsvariante nach Fig. 2 ist ähnlich aufgebaut wie die Ausführungsvariante nach Fig. 1, weshalb übereinstimmende Teile mit übereinstimmenden Bezugsziffern versehen sind. Hier werden die Ausgangsmaterialien und die Kiefernkernholzmaterialien, beispielsweise die Kiefernkernholzspäne direkt dem Extruder aufgegeben bei entsprechenden Schmelztemperaturen des Ausgangsmaterials.

Die Variante gemäß Fig. 3 ist wiederum ähnlich aufgebaut, jedoch werden hier über zwei aus dem Kiefernkernholzmaterial herausgelöste Inhaltsstoffe, z.B. durch Verdampfung erstellte Glührückstände dem Ausgangsmaterial, das bei 1 zugeführt wird, beigegeben. Über die Leitung 8 kann dann das antibakteriell ausgerüstete Ausgangsmaterial einem Weiterverarbeitungsprozess zugeführt werden.

Bei der Variante nach Fig. 4 wird bei 1 das Ausgangsmaterial, beispielsweise Kunststoffgranulat, dem Extruder 5 zugeführt. Vom Extruder 5 wird es durch eine Kartusche 12 geführt, die mit Kiefernkernholzmaterialien gefüllt ist. Danach wird das Gemisch über einen Abscheider 10 geführt, um dann über 11 einem weiteren Fertigungsprozess zugeführt werden zu können. Über die Leitung 7 kann wiederum das Material in den Ausgangsprozess rückgeführt werden.

## Patentansprüche

1. Verfahren zur Herstellung von synthetischen Produkten aus einem fließfähigen synthetischen Ausgangsmaterial (1), wobei das fließfähige synthetische Ausgangsmaterial (1) mit Partikeln und/oder Inhaltsstoffen aus einem Kiefernkernholzmaterial versehen wird, **dadurch gekennzeichnet, dass** vor Weiterverarbeitung des mit den Partikeln aus den Kiefernkernholzspänen (2) oder dem Kiefernkernholzmehl versehenen synthetischen Ausgangsmaterials das mit den Kiefernkernholzspänen oder dem Kiefernkernholzmehl versehene synthetische Ausgangsmaterial einem Abscheider (10) wie einem Spaltfilter, einem Siebfilter oder einer Zentrifuge zum Abscheiden von Kiefernkernholzspänen (2) und/oder zum Abscheiden von Kiefernkernholzmehl zugeführt wird.

2. Verfahren nach Anspruch 1, **dadurch gekennzeichnet, dass** die Kiefernkernholzspäne (2) oder das Kiefernkernholzmehl mit dem synthetischen Ausgangsmaterial (1) in einem Vormischbehälter bei Temperaturen von 170 °C bis 200 °C gerührt und/oder geknetet werden und dann einer Fördervorrichtung zugegeben werden wie einem Extruder (5) und dann zu einem erkaltetem Mischprodukt weiterverarbeitet werden, wobei vor der Weiterverarbeitung zu einem Fertigprodukt das mit den Kiefernkernholzspänen (2) oder dem Kiefernkernholzmehl versehene synthetische Ausgangsmaterial dem Abscheider (10) zugeführt wird.

3. Verfahren nach Anspruch 2, **dadurch gekennzeichnet, dass** das Fertigprodukt zu Fertigproduktpellets weiter verarbeitet wird.

4. Verfahren nach einem der Ansprüche 2 oder 3, **dadurch gekennzeichnet, dass** vor der Weiterverarbeitung zu einem gemischten Fertigprodukt das gemischte Ausgangsmaterial (1) in den Vormischbehälter rückgeführt wird.

5. Verfahren zur Herstellung von synthetischen Produkten aus einem fließfähigen synthetischen Ausgangsmaterial (1), wobei das synthetische Ausgangsmaterial (1) mit Partikeln und/oder Inhaltsstoffen aus einem Kiefernkernholzmaterial versehen wird, **dadurch gekennzeichnet, dass** das synthetische Ausgangsmaterial (1) einer mit Kiefernkernholzmaterialien versehenen Impfvorrichtung zugeführt und nach einer einstellbaren Verweildauer aus der Impfvorrichtung abgeführt wird, wobei die Impfvorrichtung als eine mit Kiefernkernholzmaterialien versehene Kartusche ausgebildet ist.

6. Verfahren nach einem der Ansprüche 1 bis 5, **dadurch gekennzeichnet, dass** das Fertigprodukt zur Fertigproduktpellets weiterverarbeitet wird.

7. Verfahren nach einem der Ansprüche 1 bis 6, **dadurch gekennzeichnet, dass** das Fertigprodukt zu 50 bis 90 Vol-% aus dem synthetischen Ausgangsmaterial und zu 10 bis 50 Vol-% aus Inhaltsstoffen oder Partikeln aus dem Kiefernkernholzmaterial besteht.

8. Verfahren nach einem der Ansprüche 1 bis 7, **dadurch gekennzeichnet, dass** vor Zugabe von Partikeln aus dem Kiefernkernholzmaterial dieses bis zu einer Restfeuchte bis maximal 5 % getrocknet wird.

## Claims

1. Method for producing synthetic products from a flowable synthetic starting material (1), the flowable synthetic starting material (1) being provided with particles and/or components consisting of a pine heartwood material, **characterised in that**, prior to further processing of the synthetic starting material provided with the particles consisting of the pine heartwood shavings (2) or the pine heartwood flour, the synthetic starting material provided with the pine heartwood shavings or pine heartwood flour is supplied to a separator (10), for example a disk filter, a screen filter or a centrifuge, for separating pine heartwood shavings (2) and/or for separating pine heartwood flour.

2. Method according to claim 1, **characterised in that** the pine heartwood shavings (2) or the pine heartwood flour are stirred and/or kneaded together with the synthetic starting material (1) in a premixing container at temperatures of from 170°C to 200°C, and are then supplied to a conveying device such as an extruder (5), and are then further processed to form a cooled mixed product, the synthetic starting material provided with the pine heartwood shavings (2) or the pine heartwood flour being supplied to the separator (10) before being further processed into a finished product.

3. Method according to claim 2, **characterised in that** the finished product is further processed into finished product pellets.

4. Method according to either claim 2 or claim 3, **characterised in that** the mixed starting material (1) is fed back into the premixing container before being further processed into a mixed finished product.

5. Method for producing synthetic products from a flowable synthetic starting material (1), the synthetic starting material (1) being provided with particles and/or components consisting of a pine heartwood material, **characterised in that** the synthetic starting material (1) is supplied to an injection device provided with pine heartwood materials, and is then discharged from the injection device after an adjustable dwell time, the injection device being designed as a cartridge provided with pine heartwood materials.

6. Method according to any of claims 1 to 5, **characterised in that** the finished product is further processed into the finished product pellets.

7. Method according to any of claims 1 to 6, **characterised in that** the finished product consists of from 50 to 90 vol.% of the synthetic starting material and of from 10 to 50 vol.% of components or particles consisting of the pine heartwood material.

8. Method according to any of claims 1 to 7, **characterised in that**, prior to the addition of particles consisting of the pine heartwood material, said pine heartwood material is dried to a residual moisture content of at most 5%.

## Revendications

1. Procédé de fabrication de produits synthétique à partir d'une matière de départ synthétique (1) à écoulement libre, la matière de départ synthétique (1) à écoulement libre contenant des particules et/ou des constituants en matériau de bois de coeur de pin, **caractérisé en ce qu'**avant de soumettre la matière de départ synthétique contenant des particules de copeaux de bois de coeur de pin (2) ou de farine de bois de coeur de pin à un traitement ultérieur, la matière de départ synthétique contenant des particules de copeaux de bois de coeur de pin (2) ou de farine de bois de coeur de pin est amenée à un séparateur (10) tel qu'un filtre à lamelles, un filtre à tamis ou une centrifugeuse pour séparer les copeaux de bois de coeur de pin (2) et/ou pour séparer la farine de bois de coeur de pin.

2. Procédé selon la revendication 1, **caractérisé en ce que** les copeaux de bois de coeur de pin (2) ou la farine de bois de coeur de pin sont agités et/ou malaxés avec la matière de départ synthétique (1) dans un récipient de pré-mélange à des températures allant de 170 °C à 200 °C, puis sont ajoutés à un dispositif de transport tel qu'une extrudeuse (5) et sont ensuite soumis à un traitement ultérieur pour obtenir un produit de mélange refroidi, la matière de départ synthétique qui contient des copeaux de bois de coeur de pin (2) ou de la farine de bois de coeur de pin étant amenée au séparateur (10) avant le traitement ultérieur pour obtenir un produit fini.

3. Procédé selon la revendication 2, **caractérisé en ce que** le produit fini est ensuite soumis un traitement ultérieur pour obtenir des granulés de produit fini.

4. Procédé selon l'une des revendications 2 ou 3, **caractérisé en ce que**, avant le traitement ultérieur pour obtenir un produit fini mélangé, la matière de départ mélangée (1) est recyclée dans le récipient de pré-mélange.

5. Procédé de fabrication de produits synthétiques à partir d'une matière de départ synthétique (1) à écoulement libre, la matière de départ synthétique (1) contenant des particules et/ou des constituants en matériau de bois de coeur de pin, **caractérisé en ce que** la matière de départ synthétique (1) est amenée à un dispositif de dopage contenant des matériaux de bois de coeur de pin et est enlevé du dispositif de dopage au bout d'un temps de séjour réglable, le dispositif de dopage étant réalisé sous la forme d'une cartouche contenant des matériaux de bois de coeur de pin.

6. Procédé selon l'une des revendications 1 à 5, **caractérisé en ce que** le produit fini est ensuite soumis à un traitement ultérieur pour obtenir des granulés de produit fini.

7. Procédé selon l'une des revendications 1 à 6, **caractérisé en ce que** le produit fini est constitué entre 50 et 90 % en volume de matière de départ synthétique et entre 10 et 50 % en volume de constituants ou de particules de matériau de bois de coeur de pin.

8. Procédé selon l'une des revendications 1 à 7, **caractérisé en ce que**, avant d'ajouter des particules de matériau de bois de coeur de pin, celui-ci est séché jusqu'à une teneur en humidité résiduelle de 5 % maximum.
